# EUROPÄISCHE PATENTANMELDUNG

(11) **EP 1 607 668 A2**
(43) Veröffentlichungstag der Anmeldung: **21.12.2005**
(21) Anmeldenummer: 05020536.8
(22) Anmeldetag: 07.04.2000
(51) Int. Cl.: F16L 11/15

(54) **Kältemittelleitung für Klimaanlagen**

(30) Priorität: 30.04.1999 DE 19919715
(62) Teilanmeldung aus: 00107526.6
(71) Anmelder: Witzenmann GmbH, 75177 Pforzheim (DE)
(72) Erfinder: Burkhardt, Carlo, Dr., 75331 Grunbach (DE); Bantscheff, Richard, 75233 Tiefenbronn (DE); Heil, Bernhard, 76316 Malsch (DE); Kowalewsky, Kai, 71292 Friolsheim (DE); Picard, Frank, 63110 Rodgau (DE); Rettkowski, Klaus, 75433 Maulbronn (DE)
(74) Vertreter: Blumenröhr, Dietrich

(57) **Zusammenfassung**

Es wird eine Kältemittelleitung für mit Kohlendioxid als Kältemittel betriebene Klimaanlagen, insbesondere Klimaanlagen von Kraftfahrzeugen, angegeben, deren beiden Enden dicht mit Anschlussteilen versehen sind. Dabei weist die Leitung einen inneren, kältemitteldichten Wellschlauch, einen diesen mit radialem Abstand umgebenden, radial druckfesten flexiblen Mantel aus Metall als Axialabstützung sowie eine den Raum zwischen den radial außen liegenden Wellenbergen des Metallschlauches und der Ummantelung spielfrei ausfüllende Zwischenlage aus druckfestem und temperaturbeständigem Kunststoff in Form von Silikonkautschuk auf.

## Beschreibung

Die Erfindung betrifft eine Kältemittelleitung für mit Kohlendioxid als Kältemittel betriebene Klimaanlagen, insbesondere Klimaanlagen von Kraftfahrzeugen mit den Merkmalen des Oberbegriffs von Anspruch 1.

Klimaanlagen insbesondere von Kraftfahrzeugen werden bisher mit fluorchlorkohlenwasserstoffhaltigen Kältemitteln betrieben, wobei wegen dessen verhältnismäßig niedrigem Druck im Bereich von 30 bis 40 bar keine Probleme in der Verwendung von flexiblen Kältemittelleitungen in Form von Elastomerschläuchen bestehen, die bei Kraftfahrzeugen wegen der Relativbeweglichkeit miteinander zu verbindender Teile und zum Zwecke der Dämpfung auftretender Schwingungen erwünscht bzw. notwendig sind.

Nunmehr besteht jedoch zunehmend die Forderung, aus Gründen des Umweltschutzes und wegen der leichteren Entsorgung Kohlendioxid als Kältemittel zu verwenden. Da dieses jedoch in verflüssigtem Zustand einzusetzen ist, steht es unter einem erheblichen Druck im Bereich von bis zu 200 bar, so dass die bekannten flexiblen Elastomerschläuche insbesondere auch aus Gründen der Permationsdichtigkeit gegenüber Kohlendioxid nicht mehr eingesetzt werden können. Vielmehr müssen entsprechend druckstabile und permationsdichte starre Glattleitungen eingesetzt werden, mit Hilfe derer sich jedoch Relativbewegungen kaum aufnehmen lassen. Außerdem stoßen die an den Enden solcher Leitungen durch Schweißen anzubringenden Anschlussteile wegen der auftretenden Schwingungen auf Stabilitätsprobleme.

Aus der DE-A 27 05 361 ist eine schwimmfähige Schlauchleitung bekannt mit einer mediumführenden Innenleitung in Form eines Ringwellschlauchs, der mit einer Umflechtung versehen ist, sowie mit einer äußeren Leitung in Form eines Wickelschlauchs und einer dazwischen angeordneten Isolierlage aus Kunststoffblöcken. Der Wellschlauch weist endständige Rohrstutzen auf, die Ringscheiben tragen zur Festlegung des äußeren Wickelschlauchs mit Hilfe zusätzlicher Ringe, wobei der Wickelschlauch über die Ringe an den Ringscheiben festgelegt und die Ringscheiben wiederum an den Rohrstutzen angeschweißt sind. Dieser Schlauchleitungsaufbau ist vergleichsweise aufwendig, schwer und teuer. Und insbesondere eignen sich die vielen aneinander angrenzenden Kunststoffblöcke nicht für die bei Kältemittelleitungen für Kraftfahrzeuge bestehenden Anforderungen, nämlich zum einen trotz der nur im Millimeterbereich liegenden Wandstärke die radialen Stützkräfte zwischen Wellschlauch und Metallmantel zu übertragen und zum anderen die auftretenden Schwingungen, insbesondere die vom Kältemittelverdichter kommenden Pulsationen, zu dämpfen und gleichzeitig einen Reibverschleiß des Metallmantels auf seiner radialen Innenseite zu verhindern.

Des Weiteren ist aus der DE-U 94 20 527 eine flexible Gasleitung bekannt, die aus einem gasführenden Stahlrohr in Form eines Wellrohrs besteht, wobei das Wellrohr von einem schlauchartigen Geflecht umgeben ist. Das Wellrohr und das Geflecht sind dadurch endständig miteinander verbunden, dass an das Wellrohr stirnseitig ein zylindrisches Rohr angeschweißt ist, dass das Geflecht sich zumindest teilweise über dieses zylindrische Rohr erstreckt und dass das Geflecht und das zylindrische Rohr am Ende des Wellrohrs von einem Rohrstück umgeben sind, wobei das zylindrische Rohr und das Geflecht sowie das Rohrstück durch mindestens eine eingepresste Vertiefung fest miteinander verbunden sind. Dieser Schlauchleitung fehlt jedoch die für die Anwendungsfälle als Kältemittelleitung unerlässliche Zwischenlage, so dass diese Technik des Anschlusses des Geflechts am Wellrohr bzw. am zylindrischen Rohrstück nicht für eine gattungsgemäße Kältemittelleitung geeignet wäre (zumal sie auch die hierbei anfallenden Drücke von bis zu 200 bar gar nicht aufnehmen könnte).

Aufgabe der Erfindung ist es daher, eine Kältemittelleitung der eingangs genannten Art als flexible Leitung auszubilden, so dass sie in dem erforderlichen Umfang Relativbewegungen benachbarter Teile aufnehmen und insbesondere vom Verdichter für das Kältemittel herrührende Schwingungen ohne die Gefahr reibungsbedingten Verschleißes dämpfen kann.

Erfindungsgemäß weist die Leitung einen inneren, kältemitteldichten und mit den Anschlussteilen verbundenen Wellschlauch aus Metall auf, wobei der Wellschlauch mit radialem Abstand von einer radial druckfesten, mit den Anschlussteilen verbundenen Axialabstützung in Form eines flexiblen Mantels aus Metall umgeben ist, wobei der Raum zumindest zwischen den radial außen liegenden Wellenbergen des Metallschlauches einerseits und der Ummantelung andererseits durch eine praktisch inkompressible und temperaturbeständige Zwischenlage aus Kunststoff spielfrei ausgefüllt ist, und wobei die Kunststoff-Zwischenlage aus Silikonkautschuk besteht.

Diese Maßnahmen haben die Wirkung, dass nunmehr der Wellschlauch als bekanntermaßen flexibles Bauteil die gasdichte Führung des Kältemittels übernehmen kann. Da er jedoch den hohen Drücken sowie den vom Kältemittelverdichter kommenden Druckpulsationen nicht allein Stand zu halten vermag, ist ihm ein radial druckfester, flexibler Metallmantel beigegeben, der gleichermaßen die Axialkräfte abstützt, die der Wellschlauch entwickelt, indem er sich unter Innendruckbelastung zu längen sucht. Damit schließlich eine Reibpaarung zwischen Wellschlauch und Metallmantel vermieden ist, die unter den auftretenden Schwingungen und Druckpulsationen zur Zerstörung der radial außen liegenden Wellenberge des Wellschlauches führen könnte, ist zwischen Wellschlauch und Metallmantel eine praktisch druckfeste Zwischenlage aus Kunststoff vorgesehen, die die erforderlichen radialen Stützkräfte zwischen Wellschlauch und Metallmantel zu übertragen vermag und die gleichzeitig die Aufgabe eines Dämpfungsgliedes für die auftretenden Schwingungen, insbesondere vom Kältemittelverdichter kommende Pulsationen übernimmt.

Insgesamt ist so ein für hohe Drücke geeignetes Leitungselement geschaffen, das in dem erforderlichen Maße flexibel ist und gleichzeitig der Dämpfung auftretender Schwingungs- und Druckpulsationsbelastungen dient.

Was die Zwischenlage zwischen Wellschlauch und diesen mit Radialabstand umgebendem Mantel betrifft, so kann vorgesehen sein, dass diese aus einem auf die Außenseite des Wellschlauches aufgeschäumten Kunststoff besteht, der die vom Wellschlauch dargebotene Außenkontur vollständig ausfüllt und eine glattzylindrische Oberfläche zur Paarung mit dem Mantel bietet. Eine solche Zwischenlage ist bei in ihr enthaltenen Gaseinschlüssen zwar teilkompressibel, wobei sich diese Kompressibilität jedoch in solchen Grenzen bewegt, dass einerseits die erforderliche Flexibilität des Wellschlauches gewährleistet ist, andererseits aber auch eine genügende Radialkraftabstützung vorliegt. Werden jedoch besonders hohe Anforderungen an die Inkompressibilität der Zwischenlage gestellt, kann diese bei besonderer Materialwahl auch frei von Gaseinschlüssen sein.

Eine andere Bauform kann jedoch auch dadurch gegeben sein, dass die Zwischenlage durch einen auf den Wellschlauch geschobenen Kunststoffschlauch gebildet ist. Ein solcher Kunststoffschlauch ist inkompressibel und kann daher die Stützfunktion für den Wellschlauch uneingeschränkt ausüben. Vorteilhaft ist es dabei, wenn der Kunststoffschlauch auf seiner Innenseite mit einer den Kuppen der radial außen liegenden Wellenbergen des Wellschlauches angepassten Profilierung versehen sowie mit nach radial innen gerichteter Vorspannung auf den Wellschlauch aufgezogen ist, da er dann auf dem Wellschlauch gegen Verschieben gesichert ist, wodurch die anschließende Montage des äußeren Metallmantels erleichtert wird.

Wie sich aus dem Vorstehenden ergibt, ist die Zwischenlage zunächst bezüglich ihrer Enden frei. Wesentlich ist nur, dass durch die Zwischenlage sämtliche radial nach außen vorstehenden Wellenberge des Wellschlauches erfasst werden, damit neben der radialen Abstützung des Wellschlauches jegliche durch Schwingungen und Druckpulsationen verursachte Reibung zwischen Wellschlauch und Mantel durch die Zwischenlage aufgenommen werden kann. Was das Material der Zwischenlage betrifft, so ist der hier vorgesehene Kunststoff ein temperaturstabilisiertes Elastomer, nämlich Silikonkautschuk.

Als besonders zweckmäßig im Sinne der Erfindung hat es sich jedoch erwiesen, dass die Zwischenlage dicht mit den Anschlussteilen verbunden ist, da auf diese Weise die Zwischenlage nicht nur ein Durchscheuern der außen liegenden Wellenberge des Wellschlauches verhindert sondern gleichzeitig einen wirksamen Schutz gegen den Zutritt äußerer Beeinträchtigungen und dadurch verursachte Korrosion des Wellschlauches bietet.

Der Wellschlauch könnte ein schraubengangförmig gewellter Metallschlauch sein. Wegen der sich damit bei hohen Innendrücken ergebenden Torsionsbewegungen zwischen den Enden des Metallschlauches ist es jedoch zweckmäßig, dass der Wellschlauch ein Ringwellschlauch aus Edelstahl ist.

Was den Metallmantel betrifft, so kann dies ein Geflechtsschlauch oder ein Gestrickschlauch aus Edelstahldrähten sein, wobei jedoch einem Geflechtsschlauch wegen seiner Fähigkeit zur Aufnahme höherer Stützkräfte der Vorzug gegeben wird. Ein solcher Geflechtsschlauch legt sich bekanntermaßen unter der vom Wellschlauch ausgeübten Streckbelastung von außen fest gegen die Zwischenlage aus Kunststoff an, so dass er dann in üblicherweise ausreichendem Maße in der Lage ist, aus der hohen Innendruckbelastung des Wellschlauches herrührende Radialbelastungen abzustützen.

Als besonders vorteilhaft wird es jedoch angesehen, dass der Metallmantel ein Agraffschlauch insbesondere in bezogen auf die Einbausituation der Leitung gestreckter Lage ist. Ein solcher Agraffschlauch ist bezüglich Radialbelastung praktisch steif, so dass er radiale Aufweitungen des Wellschlauches gerade aus hoher Innendruckbelastung sehr gut abzustützen vermag. Andererseits kann er den Wellschlauch gegen innendruckbedingte Längenänderung abstützen, wenn er so eingebaut wird, dass er sich bei der endgültigen Position der Kältemittelleitung in Strecklage befindet, wobei diese endgültige Einbausituation eine geradlinige, aber auch eine bogenförmige sein kann.

Ein Agraffschlauch hat im Übrigen auch die Fähigkeit, in gewissem Maße Schwingungen zu dämpfen vermöge der gegenseitigen Reibung der bei seiner Herstellung miteinander verfalzten Bandkanten. Hier kann es im Rahmen der Erfindung zweckmäßig sein, dass die Packungsdichte bzw. -festigkeit der ineinander greifenden Bandabschnitte des Agraffschlauches auf die für die Leitung erforderliche Dämpfung gegen Schwingungen eingestellt ist, indem der Agraffschlauch bei seiner Herstellung mehr oder weniger fest gewickelt wird, so dass er der gegenseitigen Axialverschiebung benachbarter Bandwindungen einen mehr oder weniger großen Widerstand entgegensetzt.

Was die Anschlussteile für die Kältemittelleitung betrifft, so ist es zweckmäßig, wenn dies Metallrohrstücke mit einem im Bereich des leitungsseitigen Endes angebrachten, radial nach außen vorstehenden Bund sind, wobei der Bund aus dem Metallrohrstück durch dessen radiale Aufweitung bzw. Auffaltung gebildet sein kann. Ausgehend von einer solchen Gestaltung kann dann der Mantel mit der Umfangsfläche des Bundes verbunden, insbesondere verschweißt sein. Insbesondere für einen aus einem Metalldrahtgeflecht gebildeten Mantel besteht hier jedoch auch die Möglichkeit, dass der Mantel über den jeweiligen Bund hinaus verlaufend und am Außenumfang des Bundes anliegend ausgebildet sowie mit seinen Enden bezogen auf den Wellschlauch jenseits des Bundes auf dem zugeordneten Metallrohrstück festgelegt, insbesondere angeschweißt ist. Auf diese Weise ist der Übergang des Mantels von dem einen kleineren Durchmesser aufweisenden Metallrohrstück auf den durch das Wellrohr mit aufgesetzter Zwischenlage gebildeten Außendurchmesser durch die Aufweitung bzw. Auffaltung abgestützt, so dass dieses aus dem Durchmesserübergang resultierende Abstützungserfordernis nicht von den endständigen Wellen des Wellschlauches als zusätzliche Belastung übernommen werden muss. Hier kann dann zusätzlich noch vorgesehen sein, dass die Mantelenden durch einen aufgesetzten Stützring aus Metall gefasst sind und dass die Stützringe zusammen mit den Mantelenden mit den Metallrohrstücken verschweißt sind.

Was die Enden des Wellschlauches betrifft, so können diese mit dem radial innen liegenden Fuß des jeweils zugeordneten Bundes verbunden, insbesondere verschweißt sein, wobei es zweckmäßig ist, dass das Metallrohrstück der Anschlussteile in den dem Bund benachbarten Endbereich des Wellschlauches ragt und einen dessen Innendurchmesser entsprechenden Außendurchmesser aufweist, so dass der Wellschlauch endständig auch nach innen eine Radialabstützung hat sowie die Schweißverbindung zwischen Wellschlauch und Anschlussteil erleichtert ist. In diesem Zusammenhang kann es zur Herstellung eines preisgünstigen Anschlussteiles vorteilhaft sein, dass der Bund aus dem Metallrohrstück durch dessen radiale Aufweitung gebildet ist, Metallrohrstück und Bund also ein einstückiges Bauteil bilden.

Weitere erfindungswesentliche Merkmale und Einzelheiten ergeben sich aus der nachfolgenden Beschreibung von Ausführungsformen, die auf der Zeichnung im Axialschnitt dargestellt sind. In der Zeichnung zeigen:
- Figur 1: eine erste Ausführungsform einer Kältemittelleitung im Axialschnitt;
- Figur 2: eine zweite Ausführungsform einer Kältemittelleitung im Axialschnitt und
- Figur 3: die Einzelheit III aus Figur 2 in vergrößerter Darstellung.

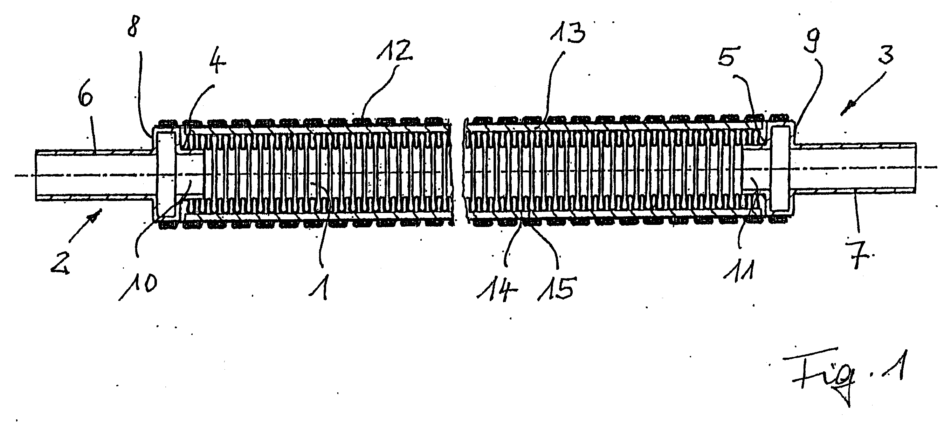

Figur 1 zeigt einen Ringwellschlauch 1 aus Edelstahl, der endständig mit Anschlussteilen 2, 3 durch Laserschweißnähte 4, 5 verbunden ist.

Die Anschlussteile 2, 3 bestehen aus Rohrstücken 6, 7, deren äußeres freies Ende als Anschweißende für weiterführende Bauteile ausgebildet sein kann. Im Bereich der Enden des Wellschlauches 1 sind aus den Rohrstücken 6, 7 durch Verformung radial nach außen vorstehende Bünde 8, 9 gebildet so, dass die Rohrstücke mit einem endständig verbleibenden Abschnitt 10, 11 noch in die Enden des Wellschlauches 1 ragen, diesen dabei auf seiner Innenseite halten und gleichzeitig die Anbringung der Schweißnähte 4, 5 erleichtern.

Mit radialem Abstand gegenüber dem Außenumfang des Wellschlauches 1 ist ein Agraffschlauch 12 aus Edelstahl vorgesehen, der mit seinen Enden beispielsweise durch Punktschweißen auf der Umfangsfläche des jeweils zugeordneten Bundes 8, 9 festgelegt ist. Der Agraffschlauch 12 befindet sich in auseinander gezogener, also Strecklage, wenn die dargestellte Form der Kältemittelleitung gleichzeitig auch der Einbausituation entspricht. Soll die Kältemittelleitung in gebogener Form eingebaut werden, befindet sich bei der aus der Zeichnung ersichtlichen Position der Agraffschlauch 12 in einer solchen Lage, dass er bei Biegung der Kältemittelleitung auf der Außenseite des dann entstehenden Bogens in Strecklage gerät.

Der Agraffschlauch 12 ist bezüglich Radialbelastung praktisch starr, so dass er vom Wellschlauch 1 unter hoher Innendruckbelastung ausgehende radiale Aufweitungen abstützen kann. Damit in diesem Zusammenhang eine abrieberzeugende Paarung zwischen Wellschlauch 1 und Agraffschlauch 12 vermieden ist, ist der radiale Zwischenraum zwischen diesen beiden Teilen durch einen Silikonkautschukschlauch 13 spielfrei ausgefüllt, wobei in nicht dargestellter Weise der Silikonkautschukschlauch 13 unter radialer Vorspannung auf den Wellschlauch 1 aufgezogen sein kann, so dass er auf diesem gegen Axialverschiebung festgelegt ist, indem das Material des Silikonkautschukschlauches 13 sich etwas in den Zwischenraum zwischen benachbarte Wellenberge 14, 15 des Wellschlauches 1 einwölbt. Ein solches geringfügiges Eindringen des Schlauches 13 in den Zwischenraum zwischen benachbarten Wellenbergen 14, 15 kann aber auch zusätzlich dadurch erzeugt bzw. unterstützt werden, dass dem Schlauch 13 schon von der Herstellung her eine entsprechende Profilierung seiner inneren Oberfläche gegeben wird.

Die soweit dargestellte und beschriebene Kältemittelleitung ist flexibel, andererseits aber auch zur Aufnahme eines unter hohem Druck stehenden Kältemittels geeignet. Vermöge ihrer Gestaltung kann sie auftretende Schwingungen, insbesondere Druckpulsationen von Seiten des Kältemittelverdichters dämpfen.

Da der Wellschlauch 1 sowohl radial als auch axial abgestützt ist, kann er trotz der aufzunehmenden hohen Innendruckbelastung verhältnismäßig dünnwandig und damit hochflexibel ausgeführt sein. Was die radiale Dicke des Silikonkautschukschlauches 13, also den Radialabstand zwischen Wellschlauch 1 und Agraffschlauch 12 betrifft, so ist hier eine Größenordnung von 1 bis 1,5 mm zweckmäßig und ausreichend.

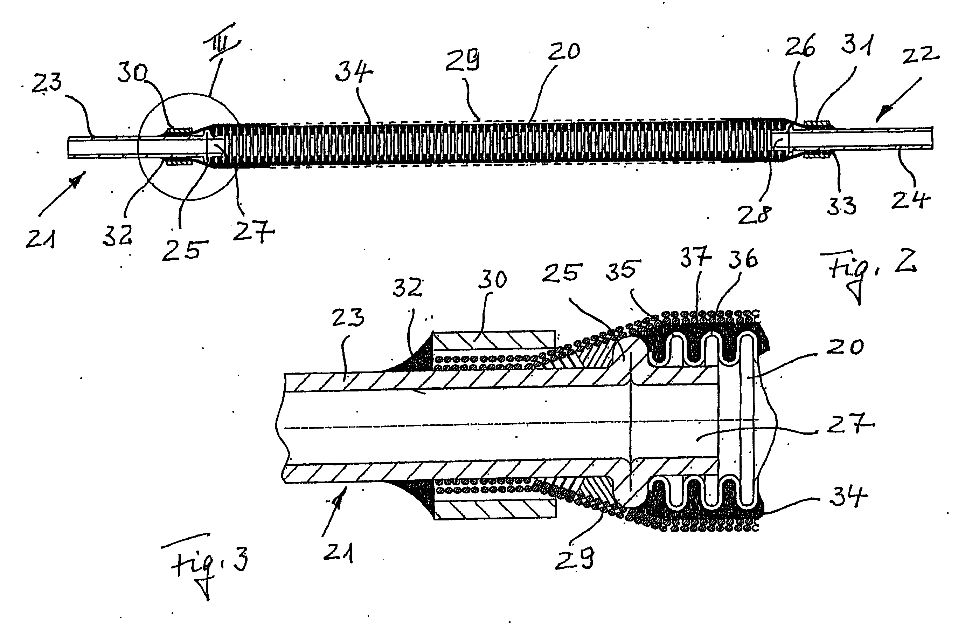

Figur 2 zeigt eine Abwandlung der Kältemittelleitung gemäß Figur 1, wobei mit Figur 3 ein Ende der Leitung zur besseren Übersicht vergrößert dargestellt ist.

Auch hier ist wieder ein Ringwellschlauch 20 aus Edelstahl endständig mit Anschlussteilen 21, 22 beispielsweise durch Laserschweißnähte verbunden. Die Anschlussteile 21, 22 bestehen aus Rohrstücken 23, 24, aus denen im Bereich der Enden des Wellschlauches 20 durch Auffaltung radial nach außen vorstehende Bünde 25, 26 gebildet sind so, dass die Rohrstücke mit einem endständig verbleibenden Abschnitt 27, 28 noch in die Enden des Wellschlauches 20 ragen, um diesen auf seiner Innenseite zu stützen.

Mit radialem Abstand gegenüber dem Wellschlauch 20 ist ein Geflechtsschlauch 29 aus Edelstahldrähten angeordnet, dessen Enden über die Bünde 25, 26 fort auf die Rohrstücke 23, 24 geführt und dort zusammen mit aufgesetzten Stützringen 30, 31 bei 32, 33 angeschweißt sind. Diese Bauform bewirkt, dass die endständigen Wellen des Wellschlauches 20 von der Umlenkung des Geflechtsmantels 29 auf den kleineren Außendurchmesser der Rohrstücke 23, 24 entlastet sind, in dem die damit einhergehende Belastung von den Bünden bzw. Auffaltungen 25, 26 aufgenommen wird.

Der Geflechtsschlauch 29 ist bezüglich Radialbelastung fest genug, um vom Wellschlauch 1 unter hoher Innendruckbelastung ausgehende radiale Aufweitungen abzustützen. Um hierbei eine abrieberzeugende Paarung zwischen Wellschlauch 20 und Geflechtsmantel 29 zu vermeiden, ist der radiale Zwischenraum zwischen diesen beiden Teilen durch eine Zwischenlage 34 spielfrei ausgefüllt, die aus auf die Außenseite des Wellschlauches 20 aufgeschäumtem, die zwischen benachbarten Wellenbergen 35, 36 gelegenen Wellentäler 37 des Wellschlauches 20 ausfüllendem Kunststoff besteht. Um den Wellschlauch 20 mit der Zwischenlage 34 dicht zu umgeben, sind die Enden der Zwischenlage 34 beim Aufspritzen gleichzeitig dicht mit den Anschlussteilen 21, 22 bzw. deren Auffaltungen 25, 26 verbunden. Auf diese Weise ist neben der Vermeidung einer Reibung zwischen Wellschlauch 20 und Geflechtsmantel 29 gleichzeitig auch der Wellschlauch 20 vor jeglichem Zutritt von außen und damit vor korrosionsbildenden Ursachen geschützt.

Zwischen den in den Figuren 1 bzw. 2, 3 gezeigten Bauformen sind selbstverständlich auch abweichende Kombinationen denkbar. So kann beispielsweise die Zwischenlage 34 gemäß Figur 2 und 3 auch durch einen Kautschukschlauch 13 gemäß Figur 1 ersetzt werden, in dem dieser endständig ebenfalls über die Auffaltungen 25, 26 nach außen geführt wird, so dass er ebenfalls den Wellschlauch 20 dicht umschließt. Andererseits könnte auch die Zwischenlage 34 aus aufgeschäumtem Kunststoff bei der Bauform gemäß Figur 1 angewandt und beim Aufspritzen dicht mit den Bünden 8, 9 verbunden werden.

## Patentansprüche

1. Kältemittelleitung für mit Kohlendioxid als Kältemittel betriebene Klimaanlagen, insbesondere Klimaanlagen von Kraftfahrzeugen, wobei die Leitung an beiden Enden dicht mit Anschlussteilen zur Verbindung mit weiterführenden Bauteilen versehen, insbesondere verschweißt ist, wobei die Leitung einen inneren, kältemitteldichten und mit den Anschlussteilen (2, 3, 21, 22) verbundenen Wellschlauch (1, 20) aus Metall aufweist, wobei der Wellschlauch (1, 20) mit radialem Abstand von einer radial druckfesten, mit den Anschlussteilen (2, 3, 21, 22) verbundenen Axialabstützung in Form eines flexiblen Mantels (12, 29) aus Metall umgeben ist, wobei der Raum zumindest zwischen den radial außen liegenden Wellenbergen (14, 15, 35, 36) des Metallschlauches (1, 20) einerseits und der Ummantelung (12, 29) andererseits durch eine praktisch inkompressible und temperaturbeständige Zwischenlage (13, 34) aus Kunststoff spielfrei ausgefüllt ist,
**dadurch gekennzeichnet,**
**dass** die Kunststoff-Zwischenlage aus Silikonkautschuk besteht.

2. Kältemittelleitung nach Anspruch 1,
**dadurch gekennzeichnet,**
**dass** die Zwischenlage (34) aus einem auf die Außenseite des Wellschlauches (1) aufgeschäumten, die Wellentäler (37) ausfüllenden Kunststoff besteht.

3. Kältemittelleitung nach einem oder mehreren der Ansprüche 1 bis 2,
**dadurch gekennzeichnet,**
**dass** die Zwischenlage durch einen auf den Wellschlauch (1) geschobenen Kunststoffschlauch (13) gebildet ist.

4. Kältemittelleitung nach Anspruch 3,
**dadurch gekennzeichnet,**
**dass** der Kunststoffschlauch (13) auf seiner Innenseite mit einer den Kuppen der radial außen liegenden Wellenberge (14, 15) des Wellschlauches angepassten Profilierung versehen ist.

5. Kältemittelleitung nach Anspruch 3 oder 4,
**dadurch gekennzeichnet,**
**dass** der Kunststoffschlauch (13) mit nach radial innen gerichteter Vorspannung auf den Wellschlauch (1) aufgezogen ist.

6. Kältemittelleitung nach einem der Ansprüche 2 bis 5,
**dadurch gekennzeichnet,**
**dass** der Kunststoff ein temperaturstabilisiertes Elastomer ist.

7. Kältemittelleitung nach einem oder mehreren der vorhergehenden Ansprüche,
**dadurch gekennzeichnet,**
**dass** die Zwischenlage (34) dicht mit den Anschlussteilen (2, 3; 21, 22) verbunden ist.

8. Kältemittelleitung nach Anspruch 1,
**dadurch gekennzeichnet,**
**dass** der Wellschlauch (1, 20) ein Ringwellschlauch aus Edelstahl ist.

9. Kältemittelleitung nach Anspruch 1 oder 8,
**dadurch gekennzeichnet,**
**dass** der Mantel ein Geflechtsschlauch (29) oder ein Gestrickschlauch aus Edelstahldrähten ist.

10. Kältemittelleitung nach Anspruch 1 oder 8,
**dadurch gekennzeichnet,**
**dass** der Mantel ein Agraffschlauch (12) ist.

11. Kältemittelleitung nach Anspruch 10,
**dadurch gekennzeichnet,**
**dass** der Agraffschlauch (12) in bezogen auf die Einbausituation der Leitung gestreckter Lage eingebaut ist.

12. Kältemittelleitung nach Anspruch 10 oder 11,
**dadurch gekennzeichnet,**
**dass** die Packungsdichte bzw. -festigkeit der ineinander greifenden Bandabschnitte des Agraffschlauches (12) auf die für die Leitung erforderliche Dämpfung gegen Schwingungen eingestellt ist.

13. Kältemittelleitung nach Anspruch 10, 11 oder 12,
**dadurch gekennzeichnet,**
**dass** der Agraffschlauch (12) ein Edelstahlschlauch ist.

14. Kältemittelleitung nach Anspruch 1,
**dadurch gekennzeichnet,**
**dass** die Mantelenden durch einen aufgesetzten Stützring (30, 32) aus Metall gefasst sind und dass die Stützringe (30, 31) zusammen mit den Mantelenden mit den Metallrohrstücken (23, 24) verschweißt (32, 33) sind.

15. Kältemittelleitung nach Anspruch 1,
**dadurch gekennzeichnet,**
**dass** die Anschlussteile (2, 3, 21, 22) aus Edelstahl hergestellt sind.
